# EUROPEAN PATENT APPLICATION

(11) **EP 3 316 034 A1**
(43) Date of publication of application: **02.05.2018**
(21) Application number: 16196744.3
(22) Date of filing: 01.11.2016
(51) Int. Cl.: G02F 1/383

(54) **APPARATUS FOR GENERATING FREQUENCY CONVERTED RADIATION, MULTI-FREQUENCY RADIATION SOURCE, FIBER LASER, METHOD OF GENERATING FREQUENCY CONVERTED RADIATION**

(71) Applicant: University of Vienna, 1010 Vienna (AT)
(72) Inventor: MOQANAKI, Amir, A-1190 Vienna (AT); MASSA, Francesco, A-1040 Vienna (AT); WALTHER, Philip, A-2344 Maria Enzersdorf (AT)
(74) Representative: J A Kemp

(57) **Abstract**

Methods and apparatus for frequency converting radiation using a loop of optical fiber are disclosed. In one arrangement, a first optical fiber having a longitudinal axis formed into a loop provides a closed loop propagation path for radiation propagating along the first optical fiber. A coupling device couples to the first optical fiber to allow input radiation to enter the first optical fiber. The first optical fiber exhibits a second or higher order non-linearity and thereby convert at least a portion of the input radiation to frequency converted radiation having a different frequency to the input radiation. The coupling device is configured such that at least a portion of the frequency converted radiation leaves the first optical fiber via the coupling device.

## Description

The present invention relates to apparatus and methods for generating frequency converted radiation, a multi-frequency radiation source using frequency conversion, and a fiber laser using frequency conversion.

Frequency conversion of photons can be achieved in materials that exhibit second or higher order nonlinear optical behaviour. Frequency doubling, where two photons having the same frequency are effectively combined into a single photon having double the frequency, is sometimes referred to as second harmonic generation and relies on a second order non-linearity. Combining more than two photons together using even higher order non-linearities is also possible.

Frequency conversion has many practical applications.

In optical communications, frequency conversion may be desirable where different parts of the communication system operate optimally at different optical frequencies.

In imaging systems, such as medical imaging systems, or in medical treatment devices using radiation, it may be desirable to use a plurality of different frequencies simultaneously using a single radiation source (e.g. a high power laser), or to be able to switch between different frequencies without switching to a different radiation source.

Frequency conversion involving down-conversion, where a single photon is split into two or more photons of lower frequency, is useful in photonic quantum technologies, for example in quantum communication, metrology, lithography, and/or quantum information processing (QIP). Spontaneous parametric down-conversion (SPDC), an example of such frequency conversion in which photons are split into pairs of photons having half the frequency of the original photon, has been found to be a useful source of coherent pairs of photons for experiments in this area, and has been used for various quantum informational tasks, including quantum teleportation.

Second harmonic generation has been used in the laser industry to widen the range of laser frequencies that are available. For example frequency doubling has been used to make green 532 nm lasers from a 1064 nm source.

A challenge in this area is coupling frequency converted radiation efficiently into the optical system of interest. Systems using fiber lasers in which the active gain medium is within the fiber, which may also be referred to as all-fiber lasers, provide efficient coupling and have been configured to provide frequency conversion. Known arrangements are not, however, able to provide both high efficiency and access to a wide range of operating frequencies.

P. G. Kazansky, L. Dong, P. St. J. Russell, OPTICS LETTERS, Vol. 19, No. 10 (1994) discloses generation of second-order nonlinearities in silica (glass) optical fibers by poling. These second-order nonlinearities allow frequency-doubling to be performed within optical fibers. Poling is a physical process through which a distribution of electrical charges in the material is changed. This can be achieved for example by applying an electric field to the material at a temperature at which ions are mobile and subsequently cooling the material to freeze in the resulting change in the distribution of electrical charge. Various detailed techniques for providing the poling are known in the art. The efficiency of the frequency conversion can be increased by compensating for the phase-velocity mismatch between the fundamental and second-harmonic waves through quasi-phase matching (QPM), as described for example in J. A. Armstrong, N. Bloembergen, J. Ducuing, and P. S. Pershan, Phys. Rev. 127, 1918 (1962). QPM can be achieved particularly efficiently using UV light to periodically erase regions of the induced second-order nonlinearity, as described for example in A. Canagasabey, C. Corbari, Z. Zhang, P. G. Kazansky, M. Ibsen, OPTICS LETTERS, Vol. 32, No. 13 (2007). The efficiency with which frequency doubling can be achieved in optical fibers remains relatively limited however.

It is an object of the present invention to provide apparatus and methods that generate frequency converted radiation efficiently, flexibly, cheaply, robustly and/or in a way which can easily be coupled into other optical systems.

According to an aspect of the invention, there is provided an apparatus for generating frequency converted radiation, comprising: a first optical fiber having a longitudinal axis formed into a loop to provide a closed loop propagation path for radiation propagating along the first optical fiber; and a coupling device configured to couple to the first optical fiber to allow input radiation to enter the first optical fiber, wherein: the first optical fiber is configured to exhibit a second or higher order non-linearity and thereby convert at least a portion of the input radiation to frequency converted radiation having a different frequency to the input radiation, the coupling device being configured such that at least a portion of the frequency converted radiation leaves the first optical fiber via the coupling device.

Thus, a simple, easy to manufacture, and robust structure is provided which the inventors have found is capable of providing frequency converted radiation with high efficiency and reliability. The frequency converted radiation is generated within an optical fiber and can therefore be integrated efficiently with external fiber networks.

The apparatus can be used for example in optical communications, where flexibility, low cost and robustness are particularly important. The apparatus can also be used as an efficient source of pairs of photons for use in photonic quantum applications (based on SPDC).

In an embodiment the first optical fiber is configured to provide a resonance condition in respect of either or both of the input radiation and the output radiation. The resonance condition can be provided easily and efficiently due to the closed loop optical path provided by the first optical fiber. The resonance condition is provided by selecting the length of the closed loop and the refractive index of the material of the first optical fiber within which the radiation propagates.

In the case where a resonance condition is provided for the output radiation, the apparatus effectively acts as a filter. Emitted photons that meet the resonance condition are output while others are not output. The apparatus can therefore provide high quality narrow band output radiation that is already coupled into an optical fiber.

These features are particularly beneficial where the frequency converted radiation is of a lower frequency than the input radiation (e.g. SPDC), for use for example in photonic quantum applications, for example where it is desired to use narrow band photons for interaction with matter. Such use of narrow band photons can be used for building quantum gates or quantum memories, the latter being important for quantum communication. A typical SPDC bandwidth (the spectral bandwidth of the emitted photons without any resonant loop or cavity) is of the order of 100 GHz. This is larger than the linewidth that can be obtained using the closed-loop cavity (the first optical fiber) of embodiments of the invention (which would typically be 10-100 MHz).

The selection of emitted photons which are resonant with the closed-loop cavity is not passive but also enhances the probability of emission in the resonant modes (active filtering). A cavity with a non-linear element inside is called optical parametric oscillator (OPO). The OPO can be operated in different resonance configurations according to the design requirements. A significant advantage of the present embodiment in comparison with prior art OPO arrangements is that the output photons are already fiber-coupled so that the collection efficiency in fiber is significantly higher than other narrow-band photon generation techniques, such as those which use bulk non-linear crystals, quantum dots, waveguides, etc..

In an embodiment the first optical fiber comprises periodic poling, the periodic poling providing a phase matching condition (which is understood to encompass what is referred to in the art as quasi-phase matching) for frequency conversion of radiation within the first optical fiber. The periodic poling may be provided using the techniques known in the art to achieve QPM, but other techniques are possible. The phase matching condition provided by the periodic poling ensures that the frequency conversion within the first optical fiber is efficient at the frequency of interest (i.e. the frequency of the input radiation).

The periodic poling can easily be adjusted, for example by changing a pitch of the periodic poling, thereby allowing an operation frequency of the apparatus to be tuned through a wide range of different frequencies. The range of frequencies is limited by the optical fiber itself rather than the adaptations for frequency conversion. The apparatus can be configured to operate for example with input radiation having a wavelength anywhere in the range of 500nm to 2 microns. This range is significantly higher than is achievable using all-fiber lasers which do not use poling (e.g. based on doped fibers).

In an embodiment, the apparatus further comprises a temperature controller operable to control either or both of a resonance condition and a phase matching condition of the first optical fiber by controlling the temperature of the first optical fiber. The temperature controller may comprise one or more heaters, one or more temperature sensors, and a control system, for example. The pitch of periodic poling of the first optical fiber will generally have a temperature dependence. Controlling the temperature makes it possible to optimise the phase matching and thereby ensure efficient and reliable frequency conversion. The resonance condition depends on the length of the closed loop and the refractive index of the optical fiber material. The temperature control thus also provides control over the resonance condition, which will also improve efficiency and/or reliability. The temperature control may also be used to deliberately shift an optimal operating frequency of first optical fiber, thereby allowing the apparatus efficiently over a small range of frequencies without any other modification of the hardware being necessary. This provides useful flexibility.

In an embodiment, the coupling device is configured to couple to the first optical fiber by evanescent coupling. The inventors have found this to be a particularly efficient way of coupling radiation into and out of the first optical fiber with minimal disruption to the frequency conversion process taking place within the optical fiber. The evanescent coupling may be achieved for example by bringing a second optical fiber alongside the first optical fiber at a distance which is small enough that an evanescent (non-propagating) field associated with the radiation within the first optical fiber extends to a significant extent into the second optical fiber.

In an embodiment, a multiple frequency radiation source is provided that comprises a laser system capable of selectively providing radiation in each of a plurality of different frequency bands; a frequency converting system configured to receive input radiation from the laser system and convert the input radiation to frequency converted radiation having a different frequency to the input radiation, wherein the frequency converting system comprises a plurality of the apparatus for generating frequency converted radiation of any embodiment of the invention, each of the apparatus being configured to perform the frequency conversion for input radiation of a respective different one of the plurality of different frequency bands.

Such a radiation source can provide radiation selectively in a wide range of different frequency bands. Basing the radiation source on use of the apparatus for generating frequency converting radiation enables the source to be manufactured cheaply and reliably in comparison to prior art alternatives.

In an embodiment, a fiber laser (all-fiber laser) is provided that comprises an apparatus according to an embodiment and wherein an optical fiber in which an active gain medium of the fiber laser is provided is coupled to the first optical fiber via the coupling device. A highly efficient frequency converting fiber laser is thereby provided. In the case where the frequency conversion comprises up-conversion, the frequency converting fiber laser can be configured to operate over a range of different frequencies (limited only by the range of frequencies available from the pump laser). For down-conversion (e.g. SPDC), the frequency converting fiber laser can be configured to provide a range of different output frequencies. A high degree of flexibility is therefore made available. The fiber laser can be formed by a simple and low cost modification of an existing (non-frequency converting fiber laser) merely be taking the output optical fiber of the existing fiber laser and coupling it to the closed loop first optical fiber to provide the resonant frequency conversion.

According to an alternative aspect of the invention, there is provided a method of generating frequency converted radiation, comprising: providing a frequency converting optical fiber having a longitudinal axis formed into a loop to provide a closed loop propagation path for radiation propagating along the frequency converting optical fiber; coupling input radiation into the frequency converting optical fibre; and coupling output radiation out of the frequency converting optical fibre, wherein: the frequency converting optical fiber exhibits a second or higher order non-linearity and thereby converts at least a portion of the input radiation to frequency converted radiation having a different frequency to the input radiation, at least a portion of the frequency converted radiation leaving the frequency converting optical fiber as the output radiation.

In an embodiment the first optical fiber is a silica or glass optical fiber. In an embodiment the first optical fiber is a single mode optical fiber, but this is not essential. In an embodiment, the frequency conversion provided by the first optical fiber is frequency doubling or frequency halving. In an embodiment the closed loop is formed by splicing of the first optical fiber with itself. The closed loop may also be referred to as a fiber-loop cavity.

Embodiments of the invention will now be described, by way of example only, with reference to the accompanying drawings in which corresponding reference symbols indicate corresponding parts, and in which:
Figure 1 schematically depicts an apparatus for generating frequency converted radiation according to an embodiment; and
Figure 2 schematically depicts a multi-frequency radiation source according to an embodiment.

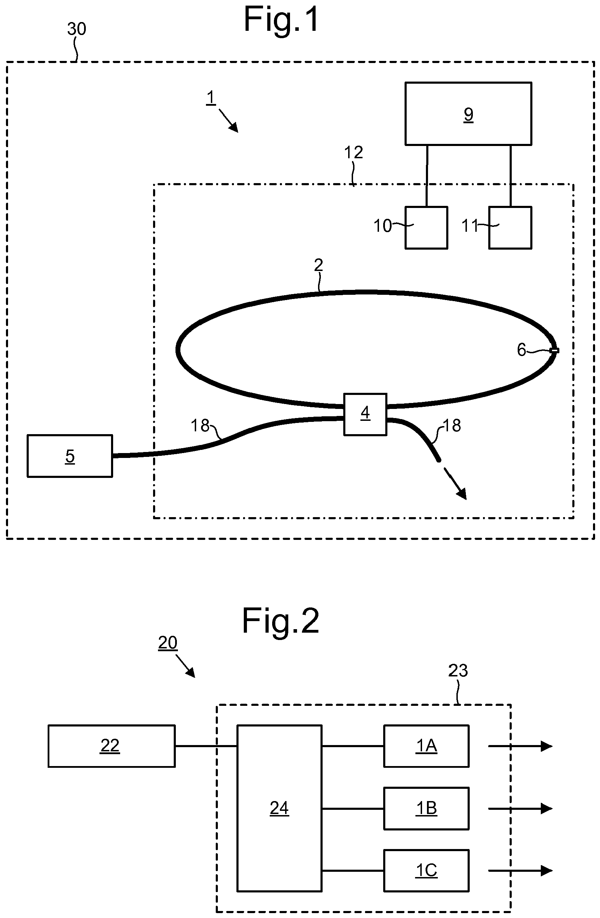

Figure 1 depicts an apparatus 1 for generating frequency converted radiation. The apparatus 1 comprises a first optical fiber 2. The first optical fiber 2 has a longitudinal axis formed into a loop. The loop provides a closed loop propagation path for radiation propagating along the first optical fiber 2. In the embodiment shown the loop of the first optical fiber 2 is spliced at splice 6 to form the closed loop. Thus, the first optical fiber 2 is itself in the form of a closed loop, except possibly for a very small region at the location of the splice 6.

Radiation propagating within the first optical fiber 2 can interfere constructively with itself, thereby achieving resonance, as it propagates multiple times around the loop. The first optical fiber 2 thus behaves in an analogous manner to an optical cavity and may be referred to as a fiber-loop cavity. Resonance will occur when a resonance condition (allowing constructive interference) is achieved. The resonance condition will depend on the frequency of the radiation and the optical path length along the closed loop. The optical path length will depend on the physical length of the closed loop and the refractive index of the material within the first optical fiber 2 through which radiation in the first optical fiber 2 propagates. Typically, the material will comprise a glass. The glass may comprise silica or another material, such as fluorozirconate, fluoroaluminate, or chalcogenide glass, or a crystalline material such as sapphire.

A coupling device 4 couples to the first optical fiber 2 to allow input radiation to enter the first optical fiber 2. The input radiation may be referred to as pump radiation. In an embodiment, as shown in the example of Figure 1, the apparatus 1 comprises a radiation source 5 for providing the input radiation. In other embodiments the radiation source is separate from the apparatus 1. In an embodiment, the coupling device 4 provides the coupling to the first optical fiber 2 based on evanescent coupling. As shown in the example of Figure 1 the evanescent coupling may provide a coupling between the first optical fiber 2 and a second optical fiber 18 (such that input radiation can enter the first optical fiber 2 from the second optical fiber 18, and output radiation can enter the second optical fiber 18 from the first optical fiber 2). The evanescent coupling may be provided for example by bringing the cores of the two optical fibers sufficiently close that the evanescent field associated with radiation propagating in one of the optical fibers penetrates significantly into the other optical fiber. Evanescent coupling is known in general terms and implementation would be within the routine capabilities of a skilled person working in this area.

The efficiency of the coupling into and out of the first optical fiber 2 may be selected to achieve a desirable balance between low loss and high output coupling. The output coupling may be viewed as a source of losses when analysing the losses of the resonator (the first optical fiber 2). The losses determine the finesse of the resonator and therefore the linewidth of the resonant modes. At the same time, the finesse determines the enhancement of the frequency conversion process in the resonator. The higher the losses, the lower the finesse and consequently the less efficient the frequency conversion process. However, it is necessary to extract radiation from the cavity for the device to be useful, so a compromise is needed between having low losses and low output coupling or high losses and high output coupling.

Frequency conversion within the first optical fiber 2 is provided by configuring the optical fiber to exhibit a second or higher order non-linearity. The first optical fiber 2 may therefore be referred to as a frequency converting optical fiber. Configuring optical fibers in this way is known in the art. For example, thermal poling can be used to break the inversion symmetry of amorphous silica in silica based glass optical fibers to create a second-order non-linearity. Various other techniques are also possible. Further details can be found for example in the Kazansky et al. (1994) reference mentioned in the introductory part of the description.

The second or higher order non-linearity causes conversion of at least a portion of the input radiation to frequency converted radiation having a different frequency to the input radiation. The coupling device 4 is configured such that at least a portion of the frequency converted radiation leaves the first optical fiber 2 via the coupling device 4. In the example of Figure 1 the frequency converted radiation leaves the first optical fiber 2 and enters the second optical fiber 18. The second optical fiber 18 then guides the frequency converted radiation out of the system as output radiation.

Typically, the first optical fiber 2 will be configured (e.g. by selection of the length of the closed loop and the refractive index of the fiber) to provide a resonance condition in respect of either or both of the input radiation and the frequency converted radiation.

As described in the introductory part of the description, arranging for a resonance condition to apply for the frequency converted radiation (i.e. the output photons) is particularly beneficial for down-conversion arrangements such as SPDC. The first optical fiber 2 in this case acts as a spectral filter with respect to the output radiation and makes it possible to achieve an efficient narrow band output. In an embodiment, the first optical fiber 2 acts as an optical parametric oscillator (OPO). It is known in the art that OPOs can be configured in various different ways to provide different resonance conditions. Further details can be found for example in Phys. Rev. Lett. 83, 2556 (1999). In contrast to the arrangements discussed in Phys. Rev. Lett. 83, 2556 (1999), embodiments disclosed herein provide an output that is already fiber-coupled, allowing significantly higher collection efficiencies to be achieved.

In an embodiment, the first optical fiber 2 comprises periodic poling. The periodic poling provides a phase matching condition for frequency conversion of radiation within the first optical fiber 2. The phase matching condition provided by the periodic poling may be a quasi-phase matching (QPM) condition. The periodic poling may be achieved for example using UV light to periodically erase regions of induced second-order nonlinearity. Further details can be found for example in the Armstrong et al. (1962) and Canagasabey et al. (2007) references mentioned in the introductory part of the description.

In various embodiments, an example of which is depicted in Figure 1, the apparatus 1 further comprises a temperature controller. As mentioned above, a pitch of periodic poling of the first optical fiber 2 will generally have a temperature dependence, as may the length of the closed loop and the refractive index of the optical fiber material. As a consequence, the temperature controller may be configured to control either or both of a resonance condition and a phase matching condition in the first optical fiber 2 by controlling a temperature of the first optical fiber 2. The temperature controller allows relatively small adjustments to be made to the resonance condition, to the phase matching condition, or both. The frequency of the input radiation for which the apparatus 1 works most efficiently can be adjusted over a small range of frequencies, thereby providing useful flexibility of operation without requiring any fundamental changes in the physical construction of the apparatus. Furthermore, the temperature control makes it possible to optimise efficiency for a given desired frequency of input radiation and to ensure that efficiency remains at a constant and predictable level. In the embodiment shown, the temperature controller comprises a control system 9, a heater 10 and a temperature sensor 11. The heater 10 may be replaced by a cooler and/or by a system capable of selectively providing both heating and cooling as desired. An enclosure (indicated schematically by dot-chain box 12) may be provided to thermally isolate a region of the apparatus including the first optical fiber 2. Further specific details are not provided here because temperature control is a routine engineering problem and the skilled person would be aware of various ways in which the control could be implemented.

In an embodiment, the apparatus 1 for generating frequency converted radiation is provided as part of a fiber laser 30. In this case, the radiation source 5 comprises a conventional fiber laser, with the second optical fiber 18 comprising the active gain medium of the fiber laser. The second optical fiber 18 may be referred to as a lasing optical fiber in such an embodiment. Instead of the second optical fiber 18 providing the output from the fiber laser, as would be the case in a conventional fiber laser 18, the second optical fiber 18 is coupled to the first optical fiber 2 via the coupling device 4. The first optical fiber 2 frequency converts the output from the radiation source 5, thereby providing a fiber laser 30 having a frequency converting output. The output is provided directly within an optical fiber as it would be with a conventional fiber laser and can therefore be coupled easily and efficiently to other components in the same way as a conventional fiber laser.

The mechanically simple nature of the resonator provided by the first optical fiber 2 means that it is economical to provide multiple instances of the resonator in a single apparatus, each resonator being tuned to operate in a different way (e.g. to provide frequency conversion efficiently for input radiation of a different frequency). A multi-frequency radiation source 20 based on this principle is described below.

Figure 2 depicts an example of a multi-frequency radiation source 20 according to an embodiment. The multi-frequency radiation source 20 comprises a laser system 22 capable of selectively providing radiation in each of a plurality of different frequency bands. The laser system 22 may comprise a tunable laser capable of being tuned to provide radiation selectively in each of the plurality of different frequency bands (i.e. in one and only one or in a selected subset of the different bands). Such tunable broadband lasers are readily available. Alternatively or additionally, the laser system 22 may comprise a plurality of separate lasers, each laser being configured to provide radiation in a different one or set of said plurality of frequency bands.

An output from the laser system 22 is provided to a frequency converting system 23. The frequency converting system 23 receives input radiation from the laser system 22 and converts the input radiation to frequency converted radiation. The frequency converted radiation has a different frequency to the input radiation. The frequency converting system 23 comprises a plurality of the apparatus 1 for generating frequency converted radiation according to any of the embodiments described herein. In the particular example shown, three such apparatus (labelled 1A, 1B and 1C) are provided, but fewer or more such apparatus may be provided as needed. In the example shown a coupling system 24 is provided that is capable of selectively coupling the input radiation provided by the laser system 22 into a selected one of the apparatus 1A-1C. Each of the apparatus 1A-1C performs the frequency conversion for input radiation of a respective different one of the plurality of different frequency bands. Thus, a change in the output from the laser system 22 will generally require a switch to a different one of the apparatus 1A-1C. Thus, the multi-frequency radiation source 20 may change an output frequency of the laser system 22 (e.g. in response to a user request) and then select a suitable one of the frequency converting optical fibers (e.g. one that has either or both of a phase matching condition and a resonance condition that matches the frequency band of the input radiation most closely), corresponding to one of the apparatus 1A-1C, and direct the input radiation into the selected frequency converting optical fiber (i.e. the associated apparatus 1A-1C). In the case where the laser system 22 is capable of simultaneously providing input radiation in a plurality of different frequency bands, the coupling system 24 may be configured to provide input radiation simultaneously to a subset (or even all) of the apparatus 1A-1C.

## Claims

1. An apparatus for generating frequency converted radiation, comprising:
a first optical fiber having a longitudinal axis formed into a loop to provide a closed loop propagation path for radiation propagating along the first optical fiber; and
a coupling device configured to couple to the first optical fiber to allow input radiation to enter the first optical fiber, wherein:
the first optical fiber is configured to exhibit a second or higher order non-linearity and thereby convert at least a portion of the input radiation to frequency converted radiation having a different frequency to the input radiation, the coupling device being configured such that at least a portion of the frequency converted radiation leaves the first optical fiber via the coupling device.

2. The apparatus of claim 1, wherein the first optical fiber comprises periodic poling, the periodic poling providing a phase matching condition for frequency conversion of radiation within the first optical fiber.

3. The apparatus of claim 1 or 2, further comprising a temperature controller operable to control either or both of a resonance condition and a phase matching condition of the first optical fiber by controlling the temperature of the first optical fiber.

4. The apparatus of any preceding claim, wherein the coupling device is configured to couple to the first optical fiber by evanescent coupling, preferably to couple the first optical fiber to a second optical fiber by the evanescent coupling.

5. The apparatus of any preceding claim, further comprising a radiation source configured to provide the input radiation to the coupling device.

6. The apparatus of claim 5, wherein the first optical fiber is configured to provide a resonance condition in respect of either or both of the input radiation and the frequency converted radiation.

7. The apparatus of any preceding claim, wherein:
the frequency converted radiation comprises radiation of a higher frequency than the input radiation, preferably twice the frequency of the input radiation; or
the frequency converted radiation comprises radiation of a lower frequency than the input radiation, preferably half the frequency of the input radiation.

8. A fiber laser comprising the apparatus of any preceding claim, wherein a lasing optical fiber is coupled to the first optical fiber via the coupling device, the lasing optical fiber comprising the active gain medium of the fiber laser.

9. A multi-frequency radiation source, comprising:
a laser system capable of selectively providing radiation in each of a plurality of different frequency bands;
a frequency converting system configured to receive input radiation from the laser system and convert the input radiation to frequency converted radiation having a different frequency to the input radiation, wherein the frequency converting system comprises a plurality of the apparatus for generating frequency converted radiation of any of claims 1-7, each of the apparatus being configured to perform the frequency conversion for input radiation of a respective different one of the plurality of different frequency bands.

10. The source of claim 9, wherein the laser system comprises a tunable laser capable of being tuned to selectively provide radiation in each of at least two of the plurality of different frequency bands.

11. The source of claim 9 or 10, wherein the laser system comprises a plurality of separate lasers, each laser being configured to provide radiation in a different one or set of said plurality of frequency bands.

12. The source of any of claims 9-11, further comprising a coupling system configured to direct input radiation provided by the laser system into a selected one or more of the apparatus for generating converted radiation, the selection being made based on the frequency band or frequency bands of the input radiation.

13. A method of generating frequency converted radiation, comprising:
providing a frequency converting optical fiber having a longitudinal axis formed into a loop to provide a closed loop propagation path for radiation propagating along the frequency converting optical fiber;
coupling input radiation into the frequency converting optical fibre; and
coupling output radiation out of the frequency converting optical fibre, wherein:
the frequency converting optical fiber exhibits a second or higher order non-linearity and thereby converts at least a portion of the input radiation to frequency converted radiation having a different frequency to the input radiation, at least a portion of the frequency converted radiation leaving the frequency converting optical fiber as the output radiation.

14. The method of claim 13, further comprising changing either or both of a resonance condition and a phase matching condition of the frequency converting optical fiber by changing a temperature of the frequency converting optical fiber.

15. The method of claim 13 or 14, wherein a plurality of the frequency converting optical fibres is provided, each frequency converting optical fibre being configured such that either or both of a phase matching condition and a resonance condition is achieved for a different frequency band of radiation, the method further comprising changing an output frequency of a laser system providing the input radiation, selecting the frequency converting optical fiber having either or both of a phase matching condition and a resonance condition that matches the frequency band of the input radiation most closely, and directing the input radiation into the selected frequency converting optical fiber.
